# EUROPÄISCHE PATENTANMELDUNG

(11) **EP 3 974 114 A1**
(43) Veröffentlichungstag der Anmeldung: **30.03.2022**
(21) Anmeldenummer: 20197811.1
(22) Anmeldetag: 23.09.2020
(51) Int. Cl.: B25F 5/02, A01G 3/053

(54) **HANDGEFÜHRTES ARBEITSGERÄT**

(71) Anmelder: Andreas Stihl AG & Co. KG, 71336 Waiblingen (DE)
(72) Erfinder: BATHKE, Lars, 73635 Rudersberg (DE); OESTERLE, Markus, 71566 Althütte (DE); SEIZ, Jonathan, 70376 Stuttgart (DE); MANN, Verena, 73630 Remshalden (DE)
(74) Vertreter: Karzel, Philipp

(57) **Zusammenfassung**

Die Erfindung betrifft ein handgeführtes Arbeitsgerät, wobei das Arbeitsgerät ein Gehäuse (2), einen Antriebsmotor (3) zum Antreiben eines Werkzeuges (4) und einen am Gehäuse (2) angeordneten Handgriff (5) umfasst. An dem Handgriff ist (5) eine Kontur (13) und an dem Gehäuse (2) eine Gegenkontur (15) vorgesehen. In der Außerbetriebsstellung (23) des Handgriffs (5) ist zwischen dem Handgriff (5) und dem Gehäuse (2) ein um die Schwenkachse (6) wirkendes, minimales Reibmoment (Mi) vorgesehen. In der Betriebsstellung (21, 22) des Handgriffes (5) stehen die Kontur (13) und die Gegenkontur (15) derart in Wirkverbindung, dass zwischen dem Handgriff (5) und dem Gehäuse (2) ein um die Schwenkachse (6) wirkendes, weiteres Reibmoment (M₂) vorliegt. Das weitere Reibmoment (M₂) in der Betriebsstellung (21, 22) ist größer als das minimale Reibmoment (Mi) in der Außerbetriebsstellung (23).

## Beschreibung

Die Erfindung betrifft ein handgeführtes Arbeitsgerät gemäß dem Oberbegriff des Anspruchs 1.

Es sind handgeführte Arbeitsgeräte bekannt, die ein Gehäuse und einen am Gehäuse schwenkbaren Handgriff aufweisen. Der Handgriff ist mit dem Gehäuse über ein Drehgelenk, das aus einem Zapfen und einer Zapfenaufnahme gebildet ist, verbunden. Zwischen dem Zapfen und der Zapfenaufnahme ist ein Dichtungsring angeordnet, der einen Spielausgleich bewirkt und dadurch ein Kippen des Handgriffs gegenüber dem Gehäuse beim Drehen des Handgriffs vermeidet. Der Dichtungsring bewirkt eine Dämpfung beim Drehen des Handgriffs gegenüber dem Gehäuse, wodurch der Bediener eine hochwertige Anmutung erfährt. Nachteilig bei derartigen Ausgestaltungen des Drehgelenks ist, dass durch Verschmutzungen zwischen Gehäuse und Handgriff das Drehgelenk schwergängig wird. Dieser Umstand wirkt sich sowohl auf die Anmutung des Arbeitsgerätes als auch auf die Funktion des Drehens nachteilig aus.

Demnach liegt der Erfindung die Aufgabe zugrunde, ein Arbeitsgerät der gattungsgemäßen Art derart weiter zu entwickeln, dass die Anmutung beim Drehen des Handgriffs erhöht ist und zugleich eine hohe Funktionalität des Arbeitsgerätes gewährleistet ist.

Diese Aufgabe wird durch ein Arbeitsgerät nach Anspruch 1 gelöst.

Das erfindungsgemäße handgeführte Arbeitsgerät umfasst einen an dem Gehäuse angeordneten Handgriff, der an dem Gehäuse um eine Schwenkachse schwenkbar gelagert ist. Der Handgriff ist in mindestens eine Betriebsstellung und in mindestens eine Außerbetriebsstellung schwenkbar. An dem Handgriff ist eine Kontur und an dem Gehäuse eine Gegenkontur vorgesehen. Die Kontur und die Gegenkontur sind derart ausgebildet, dass in der Außerbetriebsstellung des Handgriffs zwischen dem Handgriff und dem Gehäuse ein um die Schwenkachse wirkendes minimales Reibmoment vorgesehen ist und in der Betriebsstellung des Handgriffs die Kontur und die Gegenkontur derart in Wirkverbindung stehen, dass zwischen dem Handgriff und dem Gehäuse ein um die Schwenkachse wirkendes, weiteres Reibmoment vorliegt. Das weitere Reibmoment ist in der Betriebsstellung größer als das minimale Reibmoment in der Außerbetriebsstellung. Dreht der Bediener den Handgriff um die Schwenkachse, muss der Bediener, um in die Betriebsstellung zu gelangen, ein erhöhtes Reibmoment aufbringen. Mit zunehmendem Moment wird also dem Bediener vermittelt, dass dieser sich der Betriebsstellung nähert. Dieser Effekt lässt den Bediener eine hohe Qualitätsanmutung des Arbeitsgeräts erfahren. Der Begriff Reibmoment ist als ein mögliches, übertragbares Moment zwischen Handgriff und Gehäuse mittels der Kontur und der Gegenkontur zu verstehen.

Es ist vorteilhaft vorgesehen, dass in der Außerbetriebsstellung des Handgriffs zwischen dem Handgriff und dem Gehäuse ein Lagerspiel vorgesehen ist und in der Betriebsstellung des Handgriffes die Kontur und die Gegenkontur derart in Wirkverbindung stehen, dass das Gehäuse und der Handgriff zueinander verspannt sind. Durch das Lagerspiel zwischen Handgriff und Gehäuse wird dem Bediener suggeriert, dass das Arbeitsgerät noch nicht in Betriebsbereitschaft ist. Ferner lassen sich der Handgriff und das Gehäuse in der Außerbetriebsstellung einfacher zueinander schwenken. Erst durch die Verdrehung in die Betriebsstellung des Handgriffs verspannen sich das Gehäuse und der Handgriff zueinander. Dadurch sind Handgriff und Gehäuse zueinander fixiert, wodurch dem Bediener eine hohe Qualitätsanmutung vermittelt und eine Betriebsstellung des Arbeitsgerätes suggeriert wird.

Das Lagerspiel ist vorzugsweise ein bezüglich der Schwenkachse radiales Lagerspiel. Das Lagerspiel ist vorzugsweise in der Betriebsstellung des Handgriffes durch das Zusammenwirken von Kontur des Handgriffs und Gegenkontur des Gehäuses aufgehoben. Durch das Lagerspiel in der Außerbetriebsstellung können sich Verschmutzungen zwischen Gehäuse und dem Handgriff lösen. Somit wird vermieden, dass Verschmutzungen zwischen Handgriff und dem Gehäuse zu einer Blockierung beim Schwenken des Handgriffs führen.

Die Kontur ist vorzugsweise als ein Vorsprung am Handgriff ausgebildet. Die Gegenkontur ist insbesondere als ein Gehäusevorsprung ausgebildet. Es ist vorzugsweise vorgesehen, dass die miteinander in Wirkverbindung stehenden Kontaktflächen von Kontur und Gegenkontur derart zueinander ausgebildet sind, dass sich das Reibmoment beim Schwenken des Handgriffs von der Außerbetriebsstellung in die Betriebsstellung erhöht. Demnach kontaktieren sich Vorsprung des Handgriffs und Gehäusevorsprung, wodurch lediglich ein partieller Kontakt zwischen dem Handgriff und dem Gehäuse hergestellt wird. Dieser partielle Kontakt kann durch die Ausgestaltung der Vorsprünge beliebig ausgebildet sein, wodurch das zu übertragende Reibmoment eingestellt werden kann. Durch die Ausgestaltung der Vorsprünge kann beispielsweise das Reibmoment in funktionaler Abhängigkeit des Drehwinkels des Handgriffs gegenüber dem Gehäuse eingestellt werden. Durch die Höhe des Vorsprungs des Handgriffes und des Gehäusevorsprungs kann der Verspannungsgrad und damit die Größe des Reibmomentes eingestellt werden.

Die Lagerung von Gehäuse und Handgriff zueinander ist vorzugsweise durch einen in der Aufnahme gelagerten Zapfen gebildet. Der Zapfen ist vorzugsweise am Handgriff und die Aufnahme insbesondere am Gehäuse ausgebildet. Somit wird die Schwenkbarkeit des Handgriffes gegenüber dem Gehäuse durch Aufnahme und Zapfen ermöglicht. Aufnahme und Zapfen bilden somit eine radiale Lagerung.

Es ist vorteilhaft vorgesehen, dass mindestens zwei, insbesondere mindestens drei, vorzugsweise mindestens vier Konturen am Handgriff vorgesehen sind. Es kann auch eine andere Anzahl an Konturen am anderen Handgriff zweckmäßig sein. Die Konturen am Handgriff sind vorzugsweise in einem gleichmäßigen Winkelabstand versetzt zueinander angeordnet. Die Anzahl der Konturen entspricht vorzugsweise der Anzahl der Gegenkonturen. Sind die Konturen und Gegenkonturen gleichermaßen zueinander versetzt, wird mit Erhöhung der Anzahl der Konturen auch eine Erhöhung der Reibkraft ermöglicht. Ferner ist es auch möglich, durch die Erhöhung der Anzahl der Konturen diese selbst in ihrer radialen Erhöhung zu reduzieren und damit den Materialverschleiß beim Eingriff von Gegenkontur und Kontur zu reduzieren. Vorzugsweise sind die Anzahl der Konturen der Anzahl der Betriebsstellungen des Handgriffes anzupassen.

Es ist vorteilhaft vorgesehen, dass eine von der Kontur und der Gegenkontur separat ausgebildete Blockiervorrichtung zur Arretierung des Handgriffes in der Betriebsstellung vorgesehen ist. Demnach sind Kontur und Gegenkontur derart ausgebildet, dass die Reibungserhöhung bzw. die Verspannung von Gehäuse und Handgriff dann erzeugt wird, wenn auch die separat ausgebildete Blockiervorrichtung in einer verrasteten Stellung vorliegt. Demnach sind die Kontur und die Gegenkontur derart ausgebildet, dass in der Betriebsstellung des Handgriffs bei arretierter Blockiervorrichtung die Kontur und die Gegenkontur vorzugsweise im Eingriff sind.

Weitere Merkmale der Erfindung ergeben sich aus der Beschreibung und der Zeichnung, in der nachfolgend ein im Einzelnen beschriebenes Ausführungsbeispiel der Erfindung dargestellt ist. Es zeigen:
- Fig. 1: in perspektivischer Darstellung das erfindungsgemäße handgeführte Arbeitsgerät in einer unverschwenkten Betriebsstellung des Handgriffes,
- Fig. 2: in perspektivischer Darstellung das handgeführte Arbeitsgerät nach Fig. 1 in einer Außerbetriebsstellung des Handgriffs,
- Fig. 3: in perspektivischer Darstellung das handgeführte Arbeitsgerät nach Fig. 1 in verschwenkter Betriebsstellung,
- Fig. 4: in perspektivischer Darstellung den Handgriff,
- Fig. 5: in einer ausschnittsweisen Schnittdarstellung des Arbeitsgerätes die Blockiervorrichtung,
- Fig. 6: in einer Schnittdarstellung des Gehäuses die Arretieraufnahmen der Blockiervorrichtung,
- Fig. 7: in einer Seitendarstellung das handgeführte Arbeitsgerät nach Fig. 1 in erster Betriebsstellung,
- Fig. 8: in einer Schnittdarstellung entlang der Pfeile XIII in Fig. 7 das handgeführte Arbeitsgerät,
- Fig. 9: in einer ausschnittsweisen Schnittdarstellung die Kontur des Handgriffes und die Gegenkontur des Gehäuses nach Ausschnitt A in Fig. 8,
- Fig. 10: in einer Seitendarstellung das handgeführte Arbeitsgerät nach Fig. 1 in Außerbetri eb sstellung,
- Fig. 11: in einer Schnittdarstellung entlang der Pfeile XI in Fig. 10 das handgeführte Arbeitsgerät,
- Fig. 12: in einer ausschnittsweisen Schnittdarstellung die Kontur des Handgriffes und die Gegenkontur des Gehäuses nach Ausschnitt B in Fig. 11,
- Fig. 13: in einer perspektivischen Darstellung ein weiteres Ausführungsbeispiel des erfindungsgemäßen Arbeitsgerätes in Betriebsstellung des Handgriffes,
- Fig. 14: in einer perspektivischen Darstellung den Handgriff des Arbeitsgerätes nach Ausschnitt C der Fig. 13 in Betriebsstellung,
- Fig. 15: in einer perspektivischen Darstellung von oben den Handgriff des Arbeitsgerätes nach Fig. 13 in Außerbetriebsstellung,
- Fig. 16: in einer perspektivischen Darstellung von unten den Handgriff des Arbeitsgerätes nach Fig. 13 in Außerbetriebsstellung und
- Fig. 17: in einer ausschnittsweisen Schnittdarstellung die Kontur des Handgriffes und die Gegenkontur des Gehäuses im Eingriff in Betriebsstellung,
- Fig. 18: in einer ausschnittsweisen Schnittdarstellung entlang der Pfeile XVIII in Fig. 8 Kontur und Gegenkontur des Arbeitsgerätes nach Ausschnitt D gemäß Fig. 8.

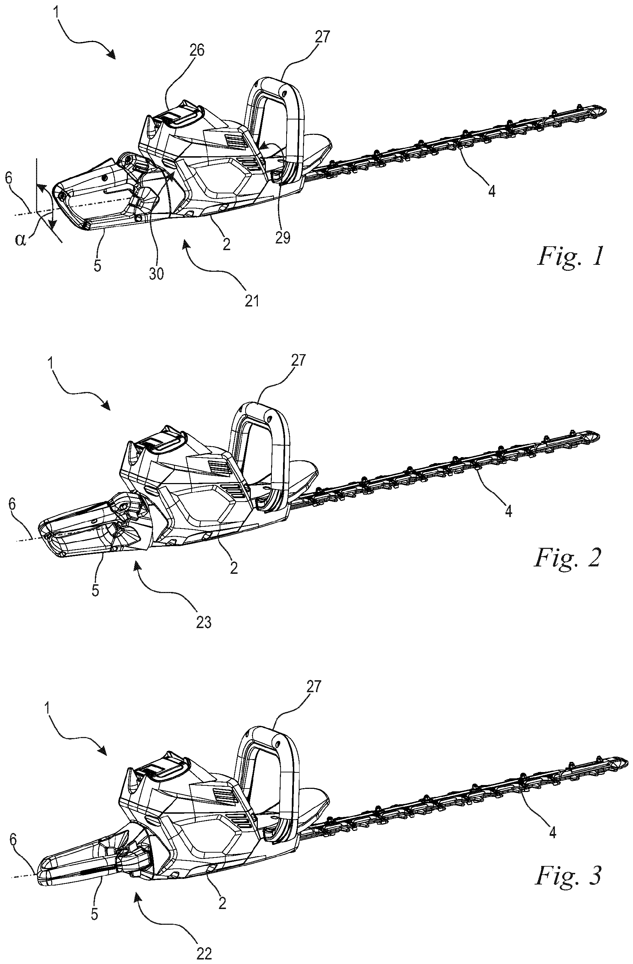

In Fig. 1 ist ein handgeführtes Arbeitsgerät 1 gezeigt, das im vorliegenden Ausführungsbeispiel als eine Heckenschere ausgebildet ist. Das Arbeitsgerät 1 umfasst ein Gehäuse 2, in dem ein schematisch dargestellter Antriebsmotor 3 angeordnet ist. Der Antriebsmotor 3 treibt ein Werkzeug 4 an, das im Ausführungsbeispiel als ein Scherblatt ausgebildet ist und aus dem Gehäuse 2 ragt. Der Antriebsmotor 3 ist als ein E-Motor ausgebildet und über einen Akkupack 26 als Energiequelle mit Energie versorgt. In einer alternativen Ausführung des Arbeitsgerätes 1 kann der Antriebsmotor 3 auch als ein Verbrennungsmotor ausgebildet sein.

Wie in Fig. 1 gezeigt, ist am Gehäuse 2 ein vorderer Handgriff 27 festgelegt, der bügelförmig ausgebildet ist. Der vordere Handgriff 27 ist in einem Bereich zwischen dem Gehäuse 2 und dem Werkzeug 4 angeordnet und übergreift das Werkzeug 4. An dem Gehäuse 2 ist an einer dem Werkzeug 4 zugewandten Seite 29 ein Handschutz 28 angeordnet, der sich etwa zwischen dem vorderen Handgriff 27 und dem Werkzeug 4 erstreckt.

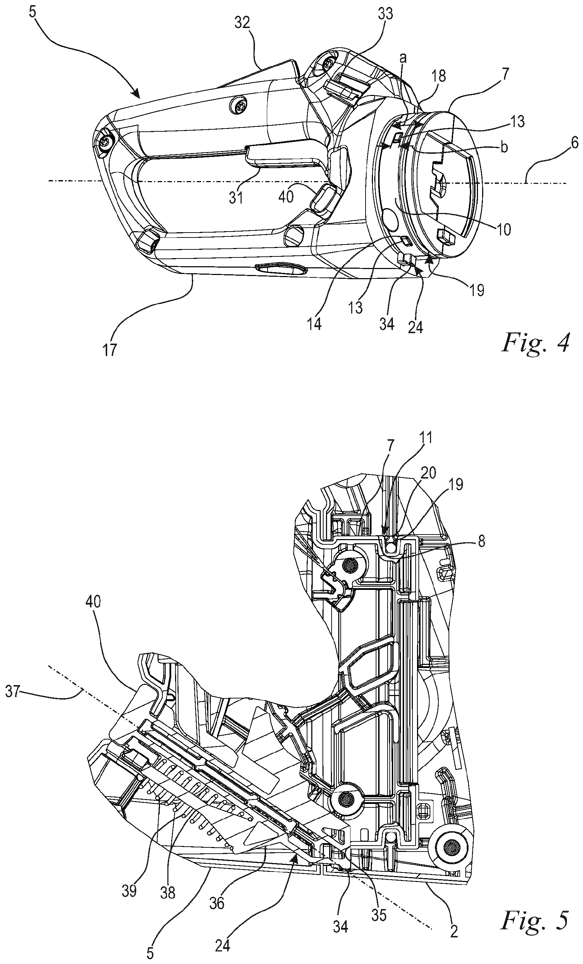

Wie in Fig. 1 gezeigt, ist an der dem Werkzeug 4 abgewandten Seite 30 des Gehäuses 2 ein hinterer Handgriff, nachfolgend Handgriff 5 genannt, angeordnet. Wie auch in Fig. 4 gezeigt, weist der Handgriff 5 einen geschlossenen Grundkörper 17 auf. Der Grundkörper 17 des Handgriffs 5 kann in einer alternativen Ausgestaltung auch offen ausgebildet sein, demnach der Handgriff 5 ein freies Ende hat. Der Grundkörper 17 des Handgriffs 5 ist im bevorzugten Ausführungsbeispiel mehrteilig ausgebildet, nämlich aus zwei Griffschalen, die vorzugsweise miteinander verschraubbar sind. Der Handgriff 5 umfasst einen Bedienhebel 31 zur Steuerung der Motorleistung und einen ersten Sperrhebel 32 sowie einen zweiten Sperrhebel 33 zur Freigabe des Bedienhebels 31. Der Handgriff 5 ist mittels einer Lagerung 9 am Gehäuse 2 um eine Schwenkachse 6 schwenkbar gelagert. Die Lagerung 9 ist durch eine Aufnahme 8 am Gehäuse 2 gebildet, in die ein Zapfen 7 des Handgriffs 5 ragt. In einer alternativen Ausführung des Arbeitsgerätes 1 kann es auch zweckmäßig sein, die Aufnahme 8 am Handgriff 5 und den Zapfen 7 am Gehäuse 2 vorzusehen. Zur Montage des Handgriffes 5 an dem Gehäuse 2 ist das Gehäuse 2 im bevorzugten Ausführungsbeispiel zweiteilig ausgebildet. Die Trennebene des Gehäuses 2 liegt in einer vertikalen Ebene 60 des Arbeitsgerätes 1, die durch die Schwenkachse 6 verläuft und in einer auf einen ebenen Boden abgelegten Stellung des Arbeitsgerätes 1 in Richtung der Schwerkraft verläuft. Ferner umfasst das Arbeitsgerät eine horizontale Ebene 61, die senkrecht zur vertikalen Ebene 60 verläuft. In einer alternativen Ausgestaltung des Arbeitsgerätes 1 ist die Trennebene des Gehäuses 2 lediglich parallel zur vertikalen Ebene 60 angeordnet. Es kann auch zweckmäßig sein, die Trennebene gegenüber der vertikalen Ebene 60 um die Schwenkachse 6 gedreht anzuordnen.

Wie in Fig. 4 gezeigt, ist der Zapfen 7 im Wesentlichen zylindrisch ausgebildet, wobei die Zylinderachse der Schwenkachse 6 des Handgriffes 5 entspricht. Der zylindrische Zapfen 7 besitzt eine Mantelfläche 18, die als bezüglich der Schwenkachse 6 radiale Abstützung gegenüber einer Innenfläche 43 der Aufnahme 8 des Gehäuses 2 dient. Damit bildet die Mantelfläche 18 des Zapfens 7 mit der Innenfläche 43 der Aufnahme 8 ein Radiallager 10 zwischen dem Handgriff 5 und dem Gehäuse 2. Ferner umfasst der Zapfen 7 eine in der Mantelfläche 18 des Zapfens 7 ausgebildete Nut 19. Die Nut 19 umläuft den Zapfen 7 vorzugsweise vollständig und ist koaxial zur Schwenkachse 6 an dem Zapfen 7 ausgebildet. An der Aufnahme 8 des Gehäuses 2 ist eine in die Nut 19 eingreifende Schulter 20 vorgesehen (Fig. 5). Die Nut 19 und die eingreifende Schulter 20 bilden in Richtung der Schwenkachse 6 eine formschlüssige Verbindung, wodurch der Handgriff 5 gegenüber dem Gehäuse 2 in axialer Richtung abgestützt ist. In einer alternativen Ausführung des Arbeitsgerätes kann es zweckmäßig sein, die Nut 19 in dem Gehäuse 2 und die Schulter 20 am Zapfen 7 vorzusehen. Damit bilden die Nut 19 des Zapfens 7 und die in die Nut 19 des Zapfens 7 eingreifende Schulter 20 der Aufnahme 8 ein Axiallager 11 zwischen dem Handgriff 5 und dem Gehäuse 2.

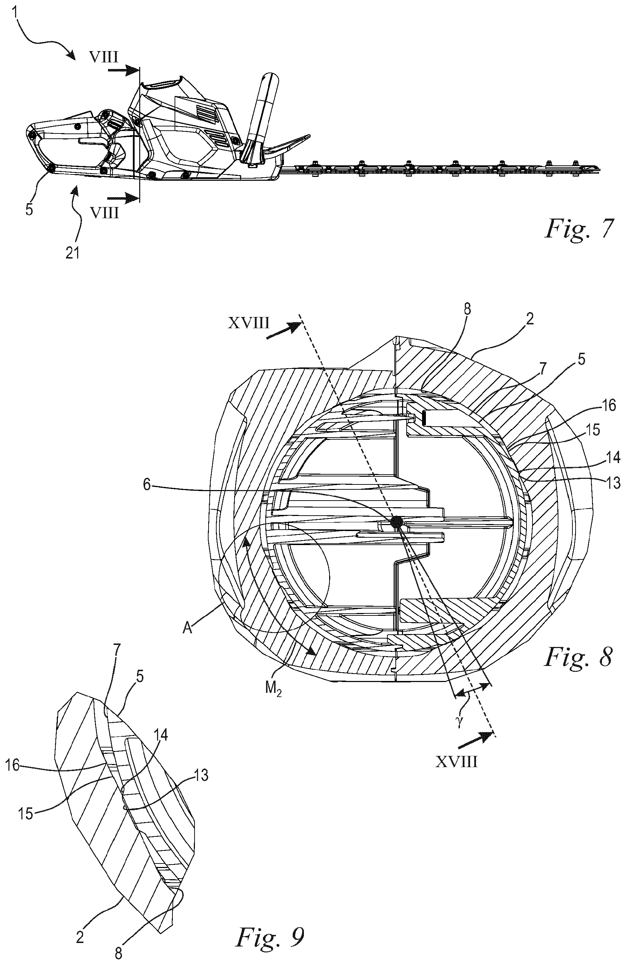

Wie in den Figuren 1 bis 3 gezeigt, ist der Handgriff 5 um die Schwenkachse 6 am Gehäuse 2 schwenkbar gelagert. Der Handgriff 5 ist von einer in Fig. 1 gezeigten ersten Betriebsstellung 21 in eine in Fig. 3 gezeigte zweite Betriebsstellung 22 schwenkbar. In der ersten Betriebsstellung 21 des Handgriffes 5 können vorzugsweise horizontale Schnitte durchgeführt werden, um beispielsweise die in etwa horizontal verlaufende Oberseite einer Hecke zu schneiden. In der zweiten Betriebsstellung 22 ist der Handgriff 5 ausgehend von der ersten Betriebsstellung 21 um einen um die Schwenkachse 6 gemessenen Winkel α (Fig. 8) von in etwa 90° geschwenkt. In einer alternativen Ausführung des Arbeitsgerätes 1 kann es vorgesehen sein, dass der Handgriff 5 um einen Winkel α von in etwa 45° zu schwenken ist, um von der ersten Betriebsstellung 21 in die zweite Betriebsstellung 22 zu gelangen. In dieser zweiten Betriebsstellung 22 können bevorzugt vertikale Schnitte, beispielsweise an vertikal verlaufenden Außenseiten einer Hecke durchgeführt werden. Beim Schwenken des Handgriffes 5 von der ersten Betriebsstellung 21 in die zweite Betriebsstellung 22 befindet sich der Handgriff 5 in einer Außerbetriebsstellung 23. In der Außerbetriebsstellung 23 ist der Betrieb des Arbeitsgerätes 1 nicht möglich.

Wie in Fig. 4 gezeigt, umfasst das Arbeitsgerät 1 eine Blockiervorrichtung 24. Die Blockiervorrichtung 24 ist zur Arretierung des Handgriffes 5 in einer Betriebsstellung 21, 22 vorgesehen. Wie in Fig. 5 gezeigt, umfasst die Blockiervorrichtung 24 mindestens zwei im Gehäuse 2 vorgesehene Arretieraufnahmen 35 und mindestens eine in der Betriebsstellung 21, 22 mit einer der Arretieraufnahmen 35 zusammenwirkende Arretierungskontur 34. Die Arretierungskontur 34 ist an einem Ende eines Blockierungsgliedes 36 angeordnet. Das Blockierungsglied 36 besitzt eine Längsachse 37, in welchem das Blockierungsglied 36 in dem Handgriff 5 verschiebbar gelagert ist. Es kann zweckmäßig sein, das Blockierungsglied 36 drehbar auszubilden. Der Handgriff 5 umfasst ein Federelement 39, wobei das Federelement 39 das Blockierungsglied 36 in Richtung zur Arretieraufnahme 35, insbesondere gegen die Arretieraufnahme 35 des Gehäuses 2 spannt. Das Federelement 39 ist mit einem Ende an einer Federaufnahme 38 des Blockierungsgliedes 36 abgestützt. Die Federaufnahme 38 ist zapfenförmig ausgebildet. Im bevorzugten Ausführungsbeispiel ist die Federaufnahme 38 mit dem Blockierungsglied 36 einteilig ausgebildet. Mit dem anderen Ende ist das Federelement 39 gegen den Handgriff 5 abgestützt. Das Federelement 39 ist im bevorzugten Ausführungsbeispiel als Schraubenfeder ausgebildet. Es können jedoch auch andere Ausbildungen des Federelementes 39 oder der Federaufnahme 38 zweckmäßig sein.

In Fig. 5 ist die Blockiervorrichtung 24 in arretierter Stellung gezeigt. Demnach ist das Blockierungsglied 36 durch das Federelement 39 abgestützt am Handgriff 5 in Richtung zum Gehäuse 2 gespannt, wodurch die Arretierungskontur 34 des Blockierungsgliedes 36 in die Arretieraufnahme 35 des Gehäuses 2 gespannt ist. Die Arretierungskontur 34 und die Arretieraufnahme 35 bilden in Richtung um die Schwenkachse 6 eine formschlüssige Verbindung, wodurch eine Relativdrehung zwischen dem Handgriff 5 und dem Gehäuse 2 um die Schwenkachse 6 gesperrt ist. Um die Blockiervorrichtung 24 zu entrasten, ist das Blockierungsglied 36 entgegen der Federkraft des Federelementes 39 in Richtung von dem Gehäuse 2 wegzuziehen. Hierfür ist am anderen Ende des Blockierungsgliedes 36 ein flächiger Halteaufsatz 40 ausgebildet. Vorzugsweise ist der Halteaufsatz 40 mit dem Blockierungsglied 36 einteilig ausgebildet. Der Halteaufsatz 40 ist derart ausgebildet, dass dieser vom Bediener des Arbeitsgerätes 1 umgriffen werden kann, wodurch das Blockierungsglied 36 entgegen der Federkraft des Federelementes 39 aus der Arretieraufnahme 35 des Gehäuses 2 gezogen werden kann. Die formschlüssige Verbindung zwischen der Arretierungskontur 34 und der Arretieraufnahme 35 ist aufgehoben. Die Blockiervorrichtung 24 befindet sich in einer freigegebenen Stellung, wodurch der Handgriff 5 relativ zum Gehäuse 2 schwenkbar ist.

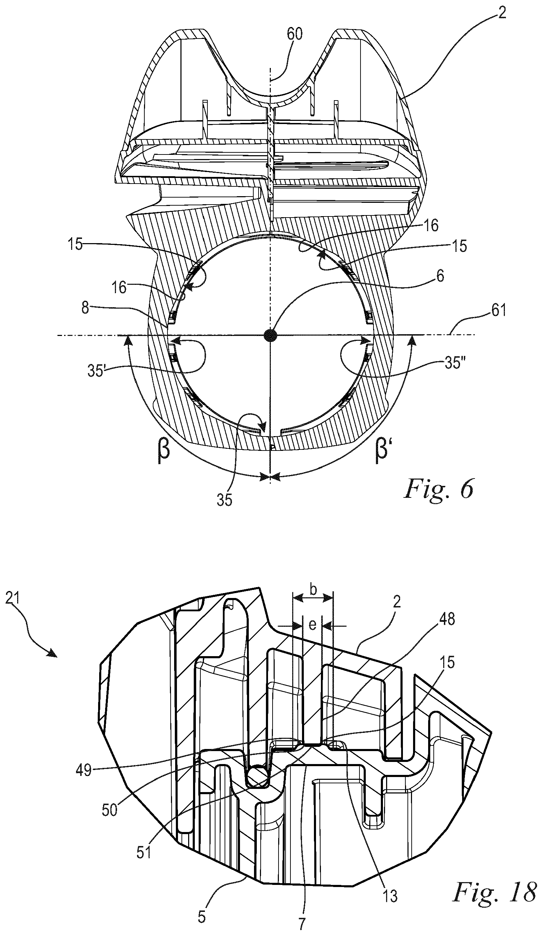

Wie in Fig. 6 gezeigt, umfasst die Blockiervorrichtung 24 drei Arretieraufnahmen 35, 35', 35", die an dem Gehäuse 2 ausgebildet sind. Im Ausführungsbeispiel sind die Arretieraufnahmen 35, 35', 35" unmittelbar in der Aufnahme 8 des Gehäuses 2 angeordnet. Es kann jedoch auch zweckmäßig sein, die Arretieraufnahmen 35, 35', 35" in einem anderen Bereich des Gehäuses 2 vorzusehen. Die Arretieraufnahmen 35, 35', 35" sind als eine Aussparung im Gehäuse 2 ausgebildet. Eine erste Arretieraufnahme 35 ist zwischen der zweiten Arretieraufnahme 35' und einer dritten Arretieraufnahme 35" angeordnet. Die erste Arretieraufnahme 35 besitzt zu der zweiten Arretieraufnahme 35' und der dritten Arretieraufnahme 35" jeweils einen um die Schwenkachse 6 gemessenen Winkelabstand β, β' von 30 bis 120°, insbesondere von 80 bis 100°, vorzugsweise von in etwa 90°, vorteilhaft von 30 bis 60°, insbesondere von in etwa 45°. Im Ausführungsbeispiel ist der Winkelabstand β, β' zwischen der ersten Arretieraufnahme 35 und den benachbarten Arretieraufnahmen 35', 35" gleich. In einer alternativen Ausführung des Arbeitsgerätes kann es auch zweckmäßig sein, verschiedene Winkelabstände vorzusehen. Im Ausführungsbeispiel ist die erste Arretieraufnahme 35 auf einer Unterseite 41 des Gehäuses 2 angeordnet. Die erste Arretieraufnahme 35 liegt in der vertikalen Ebene des Gehäuses 2. Die zweite Arretieraufnahme 35' und die dritte Arretieraufnahme 35" sind im bevorzugten Ausführungsbeispiel symmetrisch zueinander angeordnet.

Wie in den Figuren 4, 8 und 9 gezeigt, umfasst der Handgriff 5 mindestens eine Kontur 13, die in der Betriebsstellung 21, 22 mit mindestens einer an dem Gehäuse 2 ausgebildeten Gegenkontur 15 zusammenwirkt. Im bevorzugten Ausführungsbeispiel ist die mindestens eine Kontur 13 an dem Zapfen 7, insbesondere auf der Mantelfläche 18 des Zapfens 7 ausgebildet (Fig. 4). In einer alternativen Ausführung des Arbeitsgerätes kann es zweckmäßig sein, die Kontur 13 auch an anderer Stelle des Handgriffes 5 vorzusehen. Die Gegenkontur 14 ist im bevorzugten Ausführungsbeispiel in der Aufnahme 8, insbesondere an der Innenfläche 43 der Aufnahme 8 ausgebildet (Fig. 6). Wie in Fig. 4 gezeigt, ist die Kontur 13 als ein Vorsprung 14 ausgebildet. Demnach bildet der Vorsprung 14 eine Erhöhung auf der Mantelfläche 18 des Zapfens 7, die sich von der Schwenkachse 6 ausgehend in radialer Richtung erstreckt. Die Kontur 13 erstreckt sich in Umfangsrichtung der Schwenkachse 6 über einen Winkel γ, wobei der Winkel γ vorzugsweise 5 bis 25°, insbesondere 5 bis 15° beträgt. In einer alternativen Ausführung kann die Kontur 13 sich auch über einen geringeren Winkel γ erstrecken, beispielsweise, wenn die Kontur 13 lediglich als eine Spitze ausgebildet ist. Im bevorzugten Ausführungsbeispiel erstreckt sich die Kontur 13 parallel zur Schwenkachse 6 über eine Länge b, die vorzugsweise mindestens 10%, insbesondere mindestens 20%, bevorzugt in etwa 25% einer axialen Länge a des Zapfens 7 entspricht. In einer alternativen Ausführung des Arbeitsgerätes 1 können auch andere Abmaße der Kontur 13 zweckmäßig sein.

Wie in Fig. 18 gezeigt, ist die Gegenkontur 15 an einer Rippe 48 des Gehäuses 2 angeordnet. Die Gegenkontur 15 ist an der dem Zapfen 7 zugewandten Innenseite der Rippe 38 ausgebildet. Die Gegenkontur 15 erstreckt sich über eine in Richtung der Schwenkachse 6 gemessene Breite e. Die Breite e der Gegenkontur entspricht im bevorzugten Ausführungsbeispiel vorzugsweise der in Richtung der Schwenkachse 6 gemessenen Breite der Rippe 48. Die Breite b der Kontur 13 des Handgriffes 5 ist vorzugsweise größer als die Breite e der Gegenkontur 15. Im Ausführungsbeispiel liegt die Breite e der Gegenkontur 15 in einem Bereich von insbesondere 20 bis 80%, vorzugsweise 30 bis 60% der Breite b der Kontur 13. Wie in Fig. 18 gezeigt, weist die Kontur 13 eine der Rippe 48 zugewandte Stirnseite 49 auf. Die Gegenkontur 15 weist ebenfalls eine dem Zapfen 7 zugewandte Stirnseite 50 auf. In Betriebsstellung 21 kontaktieren sich die Stirnseite 49 der Kontur 13 und die Stirnseite 50 der Gegenkontur 15 flächig und bilden eine gemeinsame Kontaktfläche 51.

Wie in den Figuren 4 und 8 gezeigt, umfasst der Handgriff 5 vier Konturen 13. Zueinander benachbarte Konturen 13 sind bevorzugt in einem gleichen Winkelabstand bezüglich der Schwenkachse 6 zueinander angeordnet. Es kann zweckmäßig sein, lediglich eine Kontur 13, insbesondere zwei Konturen 13, vorzugsweise drei Konturen 13 oder mehr als vier Konturen 13 vorzusehen.

Wie in Fig. 6 gezeigt, ist die Gegenkontur 15 als ein Gehäusevorsprung 14 ausgebildet. Die Aufnahme 8 des Gehäuses 2 ist im Wesentlichen zylindrisch ausgebildet. Die Gegenkontur 15 bildet eine Abweichung der zylindrischen Aufnahme 8 in Form einer Kreissehne. Dabei erstreckt sich die Gegenkontur 15 bezüglich der Schwenkachse 6 in Richtung zur Schwenkachse 6. Im bevorzugten Ausführungsbeispiel sind analog den Konturen 13 am Handgriff 5 ebenfalls vier Gegenkonturen 15 vorgesehen. Es kann auch zweckmäßig sein, eine andere Anzahl an Gegenkonturen 15 vorzusehen. Die Gegenkonturen 15 sind derart an der Aufnahme 8 ausgebildet, dass benachbarte Gegenkonturen 15 vorzugsweise gleiche Winkelabstände in Umfangsrichtung der Schwenkachse 6 zueinander aufweisen.

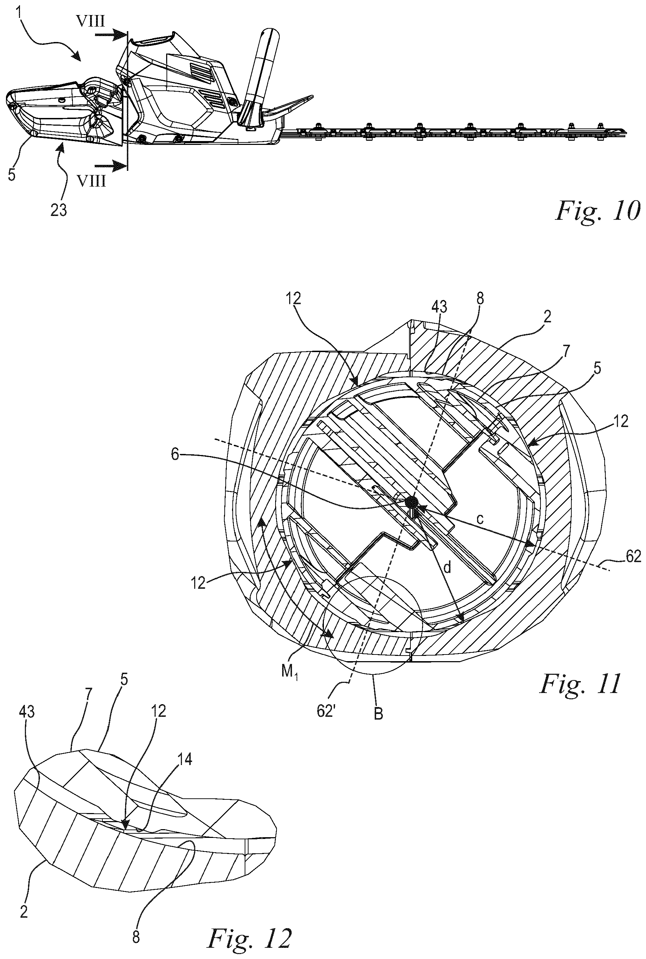

Wie in Fig. 11 gezeigt, sind die Konturen 13 an dem Handgriff 5 vorzugsweise paarweise angeordnet. Zwei Konturen 13 eines Konturpaares liegen auf einer die Schwenkachse 6 senkrecht schneidenden Geraden 62, 62'. Durch die paarweise Anordnung der Konturen 13 wird der Zapfen 7 mit der Aufnahme 8 symmetrisch zur Schwenkachse 6 verspannt. Demnach kann eine Verkippung des Zapfens 7 gegenüber der Aufnahme 8 vermieden werden. Analog sind vorzugsweise auch die Gegenkonturen 15 paarweise an der Aufnahme 8 angeordnet.

In Fig. 8 ist eine Schnittdarstellung des handgeführten Arbeitsgerätes gemäß Fig. 7 gezeigt, in der die Anordnung der Kontur 13 am Zapfen 7 und der Gegenkontur 15 der Aufnahme 8 in der Betriebsstellung 21 gezeigt ist. Die Kontur 13 des Handgriffs 5 und die Gegenkontur 15 sind derart ausgebildet, dass in der Betriebsstellung 21, 22 des Handgriffs 5 zwischen dem Handgriff 5 und dem Gehäuse 2 ein um die Schwenkachse 6 wirkendes, übertragbares Reibmoment M₂ vorgesehen ist. Dabei kann das Reibmoment M₂ in beide Drehrichtungen des Handgriffes 5 wirken. Die Kontur 13 des Handgriffs 5 und die Gegenkontur 15 des Gehäuses 2 kontaktieren sich in der Betriebsstellung 21, 22 derart, dass der Handgriff 5 mit dem Gehäuse 2 verspannt ist. Die Verspannung zwischen dem Handgriff 5 und dem Gehäuse 2 ermöglicht eine Übertragung des Reibmomentes M₂ zwischen dem Handgriff 5 und dem Gehäuse 2 über die Kontur 13 und die Gegenkontur 15. Dies hat zur Folge, dass der Bediener des Arbeitsgerätes 1 bei Drehung des Handgriffes 5 ein erhöhtes Drehmoment aufbringen muss, um das Reibmoment M₂ zu überwinden und den Handgriff 5 entweder in die Betriebsstellung 21, 22 oder den Handgriff 5 aus der Betriebsstellung 21, 22 in die Außerbetriebsstellung 23 zu schwenken.

Wie in den Figuren 10 bis 12 gezeigt, sind die Kontur 13 des Handgriffes 5 und die Gegenkontur 15 derart ausgebildet, dass in der Außerbetriebsstellung 23 des Handgriffes 5 zwischen dem Handgriff 5 und dem Gehäuse 2 ein um die Schwenkachse 6 wirkendes, minimales Reibmoment M₁ vorgesehen ist. Das Reibmoment M₂ ist größer als das Reibmoment M₁. Im bevorzugten Ausführungsbeispiel sind die Kontur 13 und die Gegenkontur 15 derart ausgebildet, dass sich die Kontur 13 und die Gegenkontur 15 in der Außerbetriebsstellung 23 nicht kontaktieren. Demnach liegt zwischen dem Handgriff 5 und dem Gehäuse 2 ein Lagerspiel 12 vor, wobei das Lagerspiel 12 insbesondere ein radiales Lagerspiel ist. Dadurch kann zwischen der Kontur 13 und der Gegenkontur 15 kein Reibmoment übertragen werden. Das minimale Reibmoment M₁ zwischen Kontur 13 und Gegenkontur 15 ist null. Der Bediener kann den Handgriff 5 bei lediglich geringem Widerstand relativ zum Gehäuse 2 schwenken. In einer alternativen Ausführung des Arbeitsgerätes 1 kann es vorgesehen sein, dass sich die Kontur 13 und die Gegenkontur 15 in der Außerbetriebsstellung 23 nur geringfügig kontaktieren, wodurch ein zumindest nur geringes Reibmoment M₁ zwischen der Kontur 13 und der Gegenkontur 15 übertragbar ist. Auch dieses geringe Reibmoment M₁ ist kleiner als das Reibmoment M₂.

Wie in Fig. 11 gezeigt, besitzt die Kontur 13 des Handgriffes 5 in der Außerbetriebsstellung 23 einen Abstand c zur Schwenkachse 6. Die Gegenkontur 15 des Gehäuses 2 besitzt in der Außerbetriebsstellung 23 einen Abstand d zur Schwenkachse 6. Der Abstand c ist größer als der Abstand d. Anders formuliert liegen alle Konturen 13 auf einem Kreis, dessen Durchmesser größer ist, als der eines Kreises, der die Gegenkonturen miteinander verbindet. Dies führt dazu, dass wenn die Kontur 13 und die Gegenkontur 15 in einer radial zur Schwenkachse 6 ausgerichteten Geraden liegen, sich die Kontur 13 und die Gegenkontur 15 kontaktieren und dabei verspannen. Folglich kann zwischen Kontur 13 und der Gegenkontur 15 das Reibmoment M₂ übertragen werden. Der Verlauf des Reibmomentes zwischen der Kontur 13 und der Gegenkontur 15 kann nach Belieben durch die geometrische Ausgestaltung der Kontur 13 und der Gegenkontur 15 eingestellt werden. Um einen gleichmäßigen Anstieg des Reibmomentes zu erzeugen, sind die Kontur 13 und die Gegenkontur an ihren in Umfangsrichtung zur Schwenkachse 6 liegenden Enden abgeflacht. Das Reibmoment kann auch durch die Anzahl der Paare aus Kontur 13 und Gegenkontur 15 erhöht oder verringert werden. Durch die zweiteilige Ausbildung des Gehäuses 2 besitzt das Gehäuse 2 eine Elastizität, die bei Verspannung des Handgriffes 5 und des Gehäuses 2 eine partielle Dehnung bzw. eine Verschiebung der Gehäuseteile zueinander zulässt. Ferner ist das Gehäuse 2 vorzugsweise aus einem Kunststoff gebildet. Die Elastizität des Kunststoffes bewirkt ebenfalls eine zumindest partielle Dehnung des Gehäuses 2. Dadurch wird die Klemmung zwischen den Konturen 13 und den Gegenkonturen 15 begünstigt.

Nachfolgend ist der Vorgang des Schwenkens von der ersten Betriebsstellung 21 in die zweite Betriebsstellung 22 näher beschrieben:
Der Handgriff 5 steht in der ersten Betriebsstellung 21 (Figuren 1, 8, 9). Die Kontur 13 und die Gegenkontur 15 kontaktieren sich, wodurch das Gehäuse 2 und der Handgriff 5 zueinander verspannt sind. Durch die Verspannung des Gehäuses 2 und des Handgriffes 5 ist ein Reibmoment M₂ zwischen dem Gehäuse 2 und dem Handgriff 5 übertragbar. Die Blockiervorrichtung 24 ist in arretierter Stellung. Demnach liegt eine formschlüssige Verbindung zwischen dem Gehäuse 2 und dem Handgriff 5 in Umfangsrichtung bezüglich der Schwenkachse 6 vor.

Zur Lösung des Handgriffes 5 aus der ersten Betriebsstellung 21 ist die Blockiervorrichtung 24 durch Ziehen an dem Halteaufsatz 40 zu entrasten, wodurch die Arretierungskontur 34 aus der Arretieraufnahme 35 gezogen wird. Die formschlüssige Verbindung in Umfangsrichtung der Schwenkachse 6 ist aufgehoben. Der Handgriff 5 ist nun relativ zum Gehäuse 2 zu drehen. Hierfür muss das vom Bediener aufzubringende Drehmoment größer sein als das zwischen der Kontur 13 des Handgriffes 5 und der Gegenkontur 15 des Gehäuses 2 übertragbare Reibmoment M₂. Der Handgriff 5 wird aus der ersten Betriebsstellung 21 in die Außerbetriebsstellung 23 geschwenkt. Die Kontur 13 und die Gegenkontur 15 kontaktieren sich nicht mehr. Die Verspannung zwischen dem Gehäuse 2 und dem Handgriff 5 ist aufgehoben. Es liegt das Lagerspiel 12 zwischen dem Gehäuse 2 und dem Handgriff 5 vor, wodurch das übertragbare Reibmoment M₁ zwischen der Kontur 13 und der Gegenkontur 15 minimal ist. Die Blockiervorrichtung 24 ist weiterhin entrastet.

Um den Handgriff 5 weiter von der Außerbetriebsstellung 23 in die zweite Betriebsstellung 22 zu schwenken, muss der Handgriff 5 weiter relativ zum Gehäuse 2 geschwenkt werden. Dabei kontaktieren sich erneut die Konturen 13 des Handgriffes 5 und die Gegenkonturen 15 des Gehäuses, wodurch das übertragbare Reibmoment M₂ wieder ansteigt. Der Bediener erkennt, dass er das aufzubringende Drehmoment erhöhen muss, um den Handgriff 5 in die zweite Betriebsstellung 22 zu überführen. Der Bediener schwenkt den Handgriff 5 relativ zum Gehäuse 2 so weit, bis die Blockiervorrichtung 24 wieder einrastet. Dabei wird das Blockierungsglied 36 mit der Arretierungskontur 34 über das Federelement 38 in die Arretieraufnahme 35 des Gehäuses 2 gedrückt, wodurch die formschlüssige Verbindung in Umfangsrichtung der Schwenkachse 6 zwischen dem Handgriff 5 und dem Gehäuse 2 wieder hergestellt ist. Der Handgriff 5 ist nun gegenüber dem Gehäuse 2 fixiert und befindet sich in der zweiten Betriebsstellung 22.

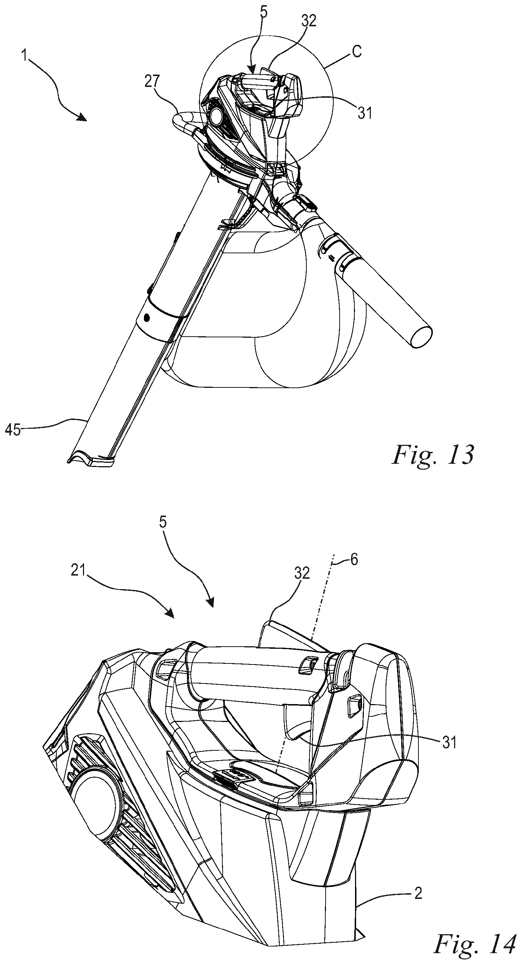

In den Figuren 13 bis 17 ist ein weiteres Ausführungsbeispiel des erfindungsgemäßen Arbeitsgerätes 1 gezeigt. Wie in Fig. 13 gezeigt, ist das Arbeitsgerät 1 als ein Saughäcksler ausgebildet. Gleiche Bezugszeichen bezeichnen gleiche Funktionsbauteile. Das Arbeitsgerät 1 umfasst ein Saugrohr 45, das an einem Gehäuse 2 angeordnet ist. In dem Gehäuse 2 ist ein Antriebsmotor 3 vorgesehen, der ein nicht näher dargestelltes Lüfterrad antreibt, um einen saugenden Luftstrom an dem offenen Ende des Saugrohres 45 zu erzeugen. Ferner umfasst das Arbeitsgerät 1 eine nicht gezeigte Zerkleinerungsvorrichtung, die das über das Saugrohr 45 angesaugte Gut häckselt und dieses zerkleinert. An dem Gehäuse 2 ist ein vorderer Handgriff 27 angeordnet, der als ein Bügelgriff ausgebildet ist.

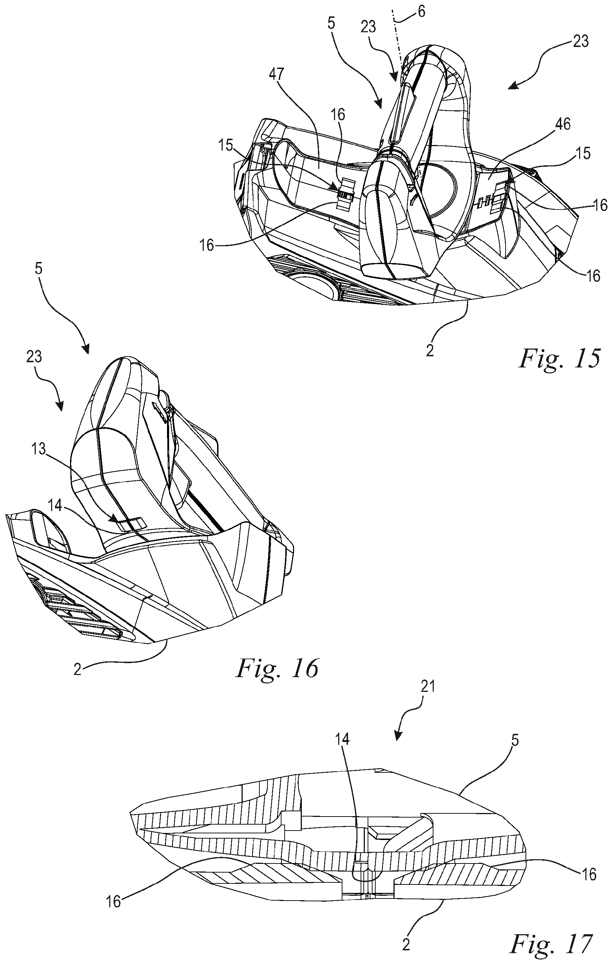

Wie in Fig. 14 gezeigt, umfasst das Arbeitsgerät 1 einen hinteren Handgriff, nachfolgend lediglich als Handgriff 5 bezeichnet, der an dem Gehäuse 2 um die Schwenkachse 6 schwenkbar gelagert ist. Der Handgriff 5 ist in Fig. 14 in der ersten Betriebsstellung 21 angeordnet. Der Handgriff 5 ist um die Schwenkachse 6 in zwei Drehrichtungen in eine zweite Betriebsstellung 22 (Fig. 15) schwenkbar.

An dem Handgriff 5 ist der Zapfen 7 ausgebildet. Der Handgriff 5 ist über den in der Aufnahme 8 des Gehäuses 2 angeordneten Zapfen 7 schwenkbar gelagert.

Wie in Fig. 15 gezeigt, ist die Gegenkontur 15 an dem Gehäuse 2 ausgebildet. Das Gehäuse 2 umfasst in dieser Ausführung zwei Gegenkonturen 15. Eine der beiden Gegenkonturen 15 ist auf einer ersten Anlagefläche 46 des Gehäuses 2 ausgebildet. Die erste Anlagefläche 46 verläuft geneigt zur Schwenkachse 6. Die andere der beiden Gegenkonturen 15 ist auf einer zweiten Anlagefläche 47 des Gehäuses 2 ausgebildet, wobei diese Anlagefläche 47 ebenfalls geneigt zur Schwenkachse 6 ausgebildet ist. Die Schrägstellung der Anlageflächen 46, 47 zur Schwenkachse 6 ist derart ausgelegt, dass sich der Handgriff 5 gegenüber dem Gehäuses 2 sowohl im Wesentlichen axial in Richtung der Schwenkachse 6 als auch radial zur Schwenkachse 6 verspannt. Es kann zweckmäßig sein, die Anlageflächen 46, 47 derart auszubilden, dass sich der Handgriff 5 entweder axial zur Schwenkachse 6 oder radial zur Schwenkachse 6 verspannt. In diesem Ausführungsbeispiel sind die Gegenkonturen 15 außerhalb der Aufnahme 8 des Gehäuses 2 ausgebildet. Eine Gegenkontur 15 ist aus zwei Gehäusevorsprüngen 16 gebildet, die zueinander beabstandet angeordnet sind.

Wie in Fig. 16 gezeigt, ist auf einer dem Gehäuse 2 zugewandten Unterseite des Handgriffs 5 mindestens eine Kontur 13 angeordnet. Im Ausführungsbeispiel ist eine weitere, nicht dargestellte Kontur 13 vorgesehen, die auf der bezüglich der Schwenkachse 6 gegenüberliegenden Seite des Handgriffes 5 angeordnet ist. Durch die paarweise Anordnung der Konturen 13 wird ein Verkippen des Handgriffes 5 beim Verspannen mit dem Gehäuse 2 vermieden. Die Gegenkontur 13 ist als ein Vorsprung 14 an der Unterseite des Handgriffes 5 ausgebildet. Die in Umfangsrichtung der Schwenkachse 6 liegenden Enden des Vorsprungs 14 sind abgeflacht. Die Kontur 13 liegt außerhalb des Zapfens 7 des Handgriffes 5.

Wie in Fig. 17 gezeigt, sind in der ersten Betriebsstellung 21 des Handgriffes 5 die Kontur 13 mit der Gegenkontur 15 des Gehäuses 2 verspannt. In dieser Stellung liegt der Vorsprung 14 des Handgriffes 5 zwischen den beiden zueinander beabstandeten Gehäusevorsprüngen 16, wobei der Vorsprung 14 in Kontakt mit den Gehäusevorsprüngen 16 steht. Der Handgriff 5 und das Gehäuse 2 sind analog der obigen Beschreibung zueinander verspannt. Es liegt zwischen dem Vorsprung 14 des Handgriffes 5 und den Gehäusevorsprüngen 16 ein übertragbares Reibmoment M₂ vor. Um den Handgriff 5 aus der ersten Betriebsstellung 21 zu lösen, muss dieses Reibmoment M₂ durch ein von dem Bediener aufgebrachtes Drehmoment überwunden werden. Der Handgriff 5 befindet sich dann in der Außerbetriebsstellung 23 (Figuren 15, 16). In der Außerbetriebsstellung 23 kontaktieren sich die Kontur 13 und die Gegenkontur 15 nicht. Der Handgriff 5 ist nicht mit dem Gehäuse 2 verspannt, wodurch ein minimales, übertragbares Reibmoment M₁ vorliegt. Um den Handgriff 5 in die zweite Betriebsstellung 22 zu überführen, ist erneut ein erhöhtes Reibmoment aufzubringen, bis der Vorsprung 14 zwischen den beiden Gehäusevorsprüngen 16 einrastet. Um den Handgriff 5 von der ersten Betriebsstellung 21 in die zweite Betriebsstellung 22 zu schwenken, muss der Handgriff um 180° um die Schwenkachse 6 gedreht werden.

## Patentansprüche

1. Handgeführtes Arbeitsgerät,
umfassend ein Gehäuse (2), einen Antriebsmotor (3) zum Antreiben eines Werkzeuges (4), und einen am Gehäuse (2) angeordneten Handgriff (5), wobei der Handgriff (5) an dem Gehäuse (2) um eine Schwenkachse (6) schwenkbar gelagert ist, wobei der Handgriff (5) in mindestens eine Betriebsstellung (21, 22) und in mindestens eine Außerbetriebsstellung (23) schwenkbar ist,
**dadurch gekennzeichnet, dass** an dem Handgriff (5) eine Kontur (13) und an dem Gehäuse (2) eine Gegenkontur (15) vorgesehen sind, und dass die Kontur (13) und die Gegenkontur (15) derart ausgebildet sind,
dass in der Außerbetriebsstellung (23) des Handgriffs (5) zwischen dem Handgriff (5) und dem Gehäuse (2) ein um die Schwenkachse (6) wirkendes, minimales Reibmoment (Mi) vorgesehen ist und in der Betriebsstellung (21, 22) des Handgriffes (5) die Kontur (13) und die Gegenkontur (15) derart in Wirkverbindung stehen, dass zwischen dem Handgriff (5) und dem Gehäuse (2) ein um die Schwenkachse (6) wirkendes, weiteres Reibmoment (M₂) vorliegt, wobei das weitere Reibmoment (M₂) in der Betriebsstellung (21, 22) größer ist als das minimale Reibmoment (Mi) in der Außerbetriebsstellung (23).

2. Arbeitsgerät nach Anspruch 1,
**dadurch gekennzeichnet, dass** in der Außerbetriebsstellung (23) des Handgriffs (5) zwischen dem Handgriff (5) und dem Gehäuse (2) ein Lagerspiel (12) vorgesehen ist und in der Betriebsstellung (21, 22) des Handgriffes (5) die Kontur (13) und die Gegenkontur (15) derart in Wirkverbindung stehen, dass das Gehäuse (2) und der Handgriff (5) zueinander verspannt sind.

3. Arbeitsgerät nach Anspruch 2,
**dadurch gekennzeichnet, dass** das Lagerspiel (12) ein bezüglich der Schwenkachse (6) radiales Lagerspiel ist.

4. Arbeitsgerät nach Anspruch 2 oder 3,
**dadurch gekennzeichnet, dass** das Lagerspiel (12) in der Betriebsstellung (21, 22) des Handgriffes (5) durch das Zusammenwirken von Kontur (13) des Handgriffes (5) und Gegenkontur (15) des Gehäuses (2) aufgehoben ist.

5. Arbeitsgerät nach einem der Ansprüche 1 bis 4,
**dadurch gekennzeichnet, dass** die Kontur (13) als ein Vorsprung (14) am Handgriff (5) ausgebildet ist.

6. Arbeitsgerät nach einem der Ansprüche 1 bis 5,
**dadurch gekennzeichnet, dass** die Gegenkontur (15) als ein Gehäusevorsprung (16) ausgebildet ist.

7. Arbeitsgerät nach einem der Ansprüche 1 bis 6,
**dadurch gekennzeichnet, dass** die miteinander in Wirkverbindung stehenden Kontaktflächen von Kontur (13) und Gegenkontur (15) derart zueinander ausgebildet sind, dass sich das Reibmoment beim Schwenken des Handgriffes (5) von der Außerbetriebsstellung (23) in die Betriebsstellung (21, 22) erhöht.

8. Arbeitsgerät nach einem der Ansprüche 1 bis 7,
**dadurch gekennzeichnet, dass** die Lagerung (9) von Gehäuse (2) und Handgriff (5) zueinander durch einen in einer Aufnahme (8) gelagerten Zapfen (7) gebildet ist.

9. Arbeitsgerät nach Anspruch 8,
**dadurch gekennzeichnet, dass** der Zapfen (7) am Handgriff (5) und die Aufnahme (8) am Gehäuse (2) ausgebildet sind.

10. Arbeitsgerät nach Anspruch 8 oder 9,
**dadurch gekennzeichnet, dass** die mindestens eine Kontur (13) am Zapfen (7) und die mindestens eine Gegenkontur (15) an der Aufnahme (8) ausgebildet sind.

11. Arbeitsgerät nach einem der Ansprüche 1 bis 10,
**dadurch gekennzeichnet, dass** mindestens zwei, insbesondere mindestens drei, vorzugsweise mindestens vier Konturen (13) am Handgriff (5) vorgesehen sind.

12. Arbeitsgerät nach Anspruch 11,
**dadurch gekennzeichnet, dass** die Konturen (13) am Handgriff (5) in einem gleichmäßigen Winkelabstand versetzt zueinander angeordnet sind.

13. Arbeitsgerät nach Anspruch 11 oder 12,
**dadurch gekennzeichnet, dass** die Anzahl der Konturen (13) der Anzahl der Gegenkonturen (15) entspricht.

14. Arbeitsgerät nach einem der Ansprüche 1 bis 13,
**dadurch gekennzeichnet, dass** eine von der Kontur (13) und der Gegenkontur (15) separat ausgebildete Blockiervorrichtung (24) zur Arretierung des Handgriffes (5) in der Betriebsstellung (21, 22) vorgesehen ist.

15. Arbeitsgerät nach Anspruch 14,
**dadurch gekennzeichnet, dass** die Kontur (13) und die Gegenkontur (15) derart ausgebildet sind, dass in der Betriebsstellung (21, 22) des Handgriffes (5) bei arretierter Blockiervorrichtung (24) die Kontur (13) und die Gegenkontur (15) im Eingriff sind.
